# NEUE EUROPÄISCHE PATENTSCHRIFT

(11) **EP 0 090 152 B2**
(45) Veröffentlichungstag und Bekanntmachung des Hinweises auf die Entscheidung über den Einspruch: **26.09.1990**
(45) Hinweis auf die Patenterteilung: 27.08.1986
(21) Anmeldenummer: 83101199.4
(22) Anmeldetag: 08.02.1983
(51) Int. Cl.: G01P 3/48, H02P 5/16

(54) **Verfahren zur Gewinnung einer drehzahlproportionalen Grösse bei einem Gleichstrommotor**
Method to obtain a speed-proportional quantity by a D.C. motor
Procédé pour obtenir une grandeur proportionnelle à la vitesse pour un moteur à courant contenu

(30) Priorität: 19.03.1982 DE 3210134
(43) Veröffentlichungstag der Anmeldung: 05.10.1983
(73) Patentinhaber: SGS Halbleiter-Bauelemente GmbH, D-8018 Grafing b. München (DE)
(72) Erfinder: Sax, Herbert, D-8201 Tattenhausen (DE)
(74) Vertreter: Klunker . Schmitt-Nilson . Hirsch

(56) Entgegenhaltungen:
- CH-A- 392 113
- DE-A- 2 310 739
- DE-A- 2 355 787
- DE-A- 2 913 838
- FR-A- 2 062 328
- FR-A- 2 095 378
- FR-A- 2 507 782
- US-A- 3 675 126
- US-A- 3 983 464
- IEEE INDUSTRY APPLICATIONS SOCIETY 12th ANNUAL MEETING, Marriott Hotel, 2.-6. Oktober 1977, Seiten 491-496, Los Angeles, California, USA H. Le-HUY: "A synchronous thyristorized DC motor drive"
- JP-KOKAI 55-113956

## Beschreibung

Die Erfindung betrifft ein Verfahren zur Gewinnung einer drehzahlproportionalen Größe für die Drehzahlregelung eines Gleichstromkommutatormotors, der eine ungerade Anzahl Kommutatorsegmente aufweist, die relativ zu den Bürsten so angeordnet sind, daß nicht mehrere Kommutatorsegmentumschaltungen gleichzeitig erfolgen, wobei dem Frequenzspektrum eines dem Motorstrom proportionalen Signals die durch die Kommutatorsegmentumschaltungen entstehenden Anteile hoher Frequenz in Form von Nadelimpulsen entnommen und als Istwertgröße für Drehzahlregelung aufbereitet werden.

Bei einem elektromechanischen Antriebssystem mit einem Gleichstrommotor als Energiewandler besteht häufig die Forderung, die Drehzahl des Gleichstrommotors mittels einer elektrisch vorgegebenen Sollwertgrösse über ein Regelsystem genau festzulegen. Sowohl aus der Motorspannung als auch aus dem Motorstrom als elektrische Grössen lassen sich unmittelbar keine Informationen über die exakte Drehzahl des Motors ableiten.

Zur Erzeugung eines Istdrehzahlsignals wird häufig ein Tachometer verwendet, der mit dem hinsichtlich seiner Drehzahl zu regelnden Motor mechanisch gekoppelt ist und ein Istdrehzahlsignal abgibt. Ein Beispiel hierfür zeigt die US-PS 3 983 464. Dort erfolgt die Drehzahlregelung dadurch, dass das vom Tachometer abgegebene Istdrehzahlsignal zusammen mit einem Solldrehzahlsignal in einen Drehzahlregler eingegeben wird, der zunächst ein Sollmotorstromsignal erzeugt. Mit Hilfe eines Motorstromsensors wird ausserdem ein Istmotorstromsignal erzeugt, das zusammen mit dem Sollmotorstromsignal auf einen Stromregler gegeben wird. Dieser regelt den Motorstrom auf einen Wert entsprechend der Solldrehzahl.

Tachometer, die im allgemeinen als Generatoren ausgebildet sind, die von dem zu regelnden Motor angetrieben werden, benötigen viel Platz. Daher wird die Tachometer-Lösung meist nur bei grösseren Motoren angewendet. Wo weniger Platz vorhanden ist, verwendet man häufig Sensoren, die auf der Motorwelle montiert sind und eine drehzahlproportionale elektrische Grösse als Istwert-Signal abgeben.

Die bisher am häufigsten verwendeten Sensoren lassen sich im wesentlichen in zwei Gruppen einteilen:
1. Optische Sensoren, die nach dem Lichtschwankungsprinzip arbeiten, wie Fotowiderstände, Fototransistoren und Fotoelemente im Zusammenwirken beispielsweise mit einer Lichtquelle und einer rotierenden Schlitzscheibe.
2. Magnetische Sensoren in Form von Wechselstromgeneratoren, Gleichstromgeneratoren und Halleffekt-Sonden.

Die Art des verwendeten Sensors orientiert sich zumeist an der Aufgabenstellung des Antriebssystems.

Alle Sensortypen für die Drehzahlerfassung weisen jedoch zwei wesentliche Nachteile auf, die ihre generelle Anwendung auch dort, wo sie wünschenswert wäre, ausschliessen:
1. Sie vergrössern das Bauvolumen des Motors, mit dem sie normalerweise eine konstruktive Einheit bilden.
2. Sie steigern die Systemkosten, insbesondere dann, wenn eine Miniaturisierung wegen einer vorgegebenen Baugrösse erforderlich ist.

Ein typisches und besonders problematisches Beispiel ist das Kassettenlaufwerk eines Autoradios mit Kassettenrecorder. Ein solches Kassettenlaufwerk weist einen Motor für den Antrieb des Bandtellers und der Kapstanwelle auf. Um eine lastunabhängige konstante Bandgeschwindigkeit sicherzustellen, muss dieser Motor drehzahlgesteuert sein. Wegen der genormten Einbauabmessungen und damit Gehäusegrössen von Autoradios steht neben dem Raumbedarf für die Elektronik und Mechanik von Autoradio und Kassettenrecorder nur ein geringes Bauvolumen für das Kassettenlaufwerk zur Verfügung. Dies ist ein Hauptgrund, weswegen trotz der Forderung nach Langzeit-Gleichlaufeigenschaften der Motordrehzahl mit Gleichlaufabweichungen von höchstens ±1 % für Kassettenlaufwerke Regelsysteme mit Tachogenerator nur beschränkt im Einsatz sind.

Hier verwendet man aus den genannten Gründen meistens indirekte Regelsysteme, bei denen der lastabhängige Motorstrom in eine Spannung umgewandelt wird und diese der von aussen zugeführten Motorspannung aufaddiert wird, wodurch sich der lastbedingte veränderliche Spannungsabfall am Motorinnenwiderstand weitgehend kompensieren läßt. Beispiele zeigen die Veröffentlichungen "Circuits for electronics engineers" von Samuel Weber, Electronics Magazine Book Series, Seiten 4-16 und 4-17, und "DC Motors, Speed Controls, Servo Systems", Engineering's Handbook by Electro-Craft Corp. Expanded Third Edition, 1977, S. 81. Dabei sind allerdings stabile Bedingungen vorausgesetzt, die im praktischen Einsatz nicht vorhanden sind. Aufgrund von fertigungstechnischen, thermischen und alterungsbedingten Toleranzen und Veränderungen des Motorinnenwiderstandes erreicht man mit diesem Prinzip in der Praxis nur eine beschränkte Drehzahlgenauigkeit. Mit den derzeit am häufigsten verwendeten Motoren sind Langzeit-Gleichlaufeigenschaften mit Gleichlaufschwankungen von etwa ±33% erreichbar. Diesen Werten stehen zukünftige Forderungen weit höherer Präzision gegenüber, wenn aktuelle HiFi-Din-Normen erfüllt werden sollen.

Eine weitere, bekannte Methode besteht darin, den Motor zugleich als Tachogenerator zu verwenden. Hierbei sind zwei grundsätzlich verschiedene Prinzipien bekannt:

1. Der Motorstrom wird kurzzeitig abgeschaltet und in dieser Abschaltphase wird die Motor-Gegen-EMK gemessen und als Istwertgrösse für das Regelsystem gespeichert.

Dieses Prinzip ist jedoch nur bei eisenlosen Motoren mit geringer Welligkeit der Tachospannung im Generatorbetrieb möglich und bei den in Autoradio-Kassettenlaufwerken verwendeten Eisenanker-Motoren nich anwendbar.

2. Der Motor wird strommässig angesteuert. Dabei wird zugleich die durch die Kommutierung verursachte Motorwechselspannung über eine geeignete Verstärker-Begrenzer-Kombination hinsichtlich ihrer Frequenz ausgewertet, die synchron zur Motordrehzahl ist und somit als istwertgrösse verwendbar ist.

Mit diesem Prinzip ist nur ein geringer Störabstand erreichbar, da das Motorkommutierungssignal sehr abhängig ist vom Lastmoment, der Alterung des Motors und der Umgebungstemperatur. Deswegen ist dieses Prinzip bisher für die Anwendung in Kassettenlaufwerken in Autoradios nicht geeignet.

Aus den Patent abstracts of Japan vom 20. November 1980, Veröffentlichung zur japanischen Offenlegungsschrift 55--113 956 und aus dieser Offenlegungsschrift, ist es bekannt, bei einem Gleichstrommotor mit einer ungeraden Anzahl Kommutatorsegmente, von denen nicht mehrere gleichzeitig geschaltet werden können, Stromänderungen während des Kurzschließens zweier benachbarter Kommutatorsegmente durch die Kommutatorbürste mittels eines zu dem Gleichstrommotor in Reihe geschalteten Widerstandes in nadelimpulsförmige Spannungsänderungen umzusetzen und die Anzahl dieser Spannungsänderungen pro Zeiteinheit als Maß für die Drehzahl des Motors zu verwenden.

Üblicherweise wird einem Sollwert-Istwert-Vergleicher einer Drehzahlregeleinrichtung für Gleichstromkommutatormotor eine Sollwertspannung zugeführt. Somit ist es erforderlich, die Nadelimpulse mit drehzahlproportionaler Frequenz gemäß der oben angegebenen japanischen Offenlegungsschrift in ein frequenzproportionales Gleichspannungssignal umzuwandeln, wofür eine Integrierstufe verwendet wird, welche die in ihrer Frequenz von der Drehzahl abhängigen Impulse intregriert. Um bei niedrigen Motordrehzahlen zu einem geeigneten Istwert-Signal zu kommen, bedarf es einer relativ großen Intergrationszeitkonstante. Dadurch kann die Regelung bei Lastmomentsänderungen unbefriedigend sein, da bei niedrigen Drehzahlen und entsprechend niedriger Frequenz der zu integrierenden Impulse die Integrationszeitkonstante zwangsläufig lang ist, wodurch sich eine merkbare Regelverzögerung ergibt.

Ein Gleichstromkommutatormotor mit ungerader Anzahl von Wicklungen und Segmenten ist auch aus der FR-A-2 062 328 bekannt.

Aufgabe der Erfindung ist es, eine Methode zur Drehzahlregelung für Gleichstrommotoren verfügbar zu machen, die ohne Tachometer oder auf der Motorwelle montierte Sensoren auskommt und die dennoch eine zuverlässige, gegen Störungen weitgehend unempfindliche und möglichst trägheitslose Drehzahlregelung ermöglicht.

Diese Aufgabe wird bei dem vorausgesetzten Verfahren dadurch gelöst, daß zu einer Drehzahlgrobregelung eine negative Impedanz mit einem dem Motorstrom proportionalen Signal beeinflußt wird, daß der Widerstandswert der negativen Impedanz kleiner ist als der Innenwiderstand des Gleichstrommotors und daß zu einer Drehzahlfeinregelung die aus den Nadelimpulsen aufbereitete Istwertgröße verwendet wird, siehe Patentanspruch 1. Eine Einrichtung zur Durchführung dieses Verfahrens ist in Patentanspruch 8 angegeben.

Bei dem erfindungsgemäßen Verfahren wird somit eine Grobregelung durch Kompensation des Motorinnenwiderstandes mit einer Impedanz negativen Widerstandes vorgenommen und eine Feinregelung unter Ausnutzung der aus dem motorstromproportionalen Signal gewonnenen Nadelimpulse durchgeführt. Dabei wird die Impedanz mit negativem Widerstand vorzugsweise zu etwa 90% des Motorinnenwiderstandes gemacht. Für die Feinregelung bleibt daher ein relativ enger Regelbereich übrig, was eine Integrierstufe mit kurzer Regelzeit ermöglicht, da nur noch 10% des Regelvorgangs von der Integrierstufe bewältigt zu werden brauchen, und damit kommt man zu einer praktisch trägheitsfreien Regelung auf die Nenndrehzahl auch bei schnellen Lastmomentänderungen.

Bei den Kommutatorsegmentumschaltungen kommt es zu Stromänderungen in den einzelnen Kommutatorwicklungen, die im Motorgesamtstrom von der Drehzahl abhängige Stromschwankungen bewirken, aus denen die Nadelimpulse gewonnen werden. Prinzipiell ist jeder Gleichstromkommutatormotor mit einer ungeraden Anzahl von Kommutatorwicklungen und Kommutatorsegmenten verwendbar. Mit zunehmender Anzahl der Kommutatorwicklungen und Kommutatorsegmente werden jedoch die charakteristischen Stromschwankungen bei den Kommutatorsegmentumschaltungen immer schwächer. Besonders bevorzugt wird daher die Verwendung eines dreipoligen Gleichstromkommutatormotors.

Bei einer derartigen bevorzugten Lösung mit einem dreipoligen Motor sind die Kommutator- bzw. Rotorwicklungen in einer Dreieckschaltung miteinander verbunden, und die Geschwindigkeit der Stromänderungen im Motorstromkreis wird zur Aufbereitung einer Istwergrösse ausgewertet, indem die oberen Frequenzanteile des sich ergebenden Spektrums des Motorstroms selber oder einer dem Motorstrom proportionalen Grösse in Form von Nadelimpulsen als Istwertgrösse für die Drehzahl verwendet werden.

Mit der Erfindung ist es möglich geworden, gegenüber herkömmlichen Motorregelsystemen mit Tachogenerator durch Wegfall des Tachogebers eine verringerte Baugrösse und geringere Herstellungskosten zu erreichen, und zar unter Aufrechterhaltung einer genauen und praktisch trägheitsfreien Drehzahlregelung. Ausserdem ist es gelungen, indirekte, motorstromegsteuerte Systeme durch echte Sollwert-Istwert-Regelungen hoher Genauigkeit zu ersetzen, ohne dass ein Tachogenerator erforderlich wäre.

In bevorzugter Weise wird bei einer Weiterbildung der Erfindung mit Hilfe eines Strom-Spannungs-Wandlers ein dem Motorstrom proportionales Spannungssignal gewonnen und durch dessen Differenzierung werden die als Istwertgrösse für die Drehzahlregelung verwendeten Nadelimpulse gewonnen.

Das differenzierte Signal kann dann in einem Komparator mit einem Schwellenwert verglichen werden, um Anteile niedrigerer Frequenzen des Spektrums der Motorstromänderungen auszuschalten.

In bevorzugter Weise wird das so erhaltene Impulssignal in einer Frequenz-Spannungs-Wandlerstufe in eine Gleichspannungssignal umgewandelt, das der Frequenz der durch das Differenzieren und Vergleichen mit dem Schwellenwert erhaltenen Impulse entspricht. Dieses Gleichspannungssignal wird dann als Istwert einem Sollwert-Istwert-Vergleicher zugeführt.

Als Frequenz-Spannungs-Wandler kann in besonders bevorzugter Weise eine Serienschaltung aus einer monostabilen Kippstufe und einer dieser nachgeschalteten Integrierstufe verwendet werden. Die durch das Differenzieren und Vergleichen mit dem Schwellenwert erhaltenen Impulse dienen als Triggerimpulse der monostabilen Kippstufe, die auf die Integrierstufe Impulse gibt, deren Flankiersteilheit und Impulsdauer lediglich von der monostabilen Kippstufe abhängt, nicht jedoch von beispielsweise der momentanen Drehzahl.

Die Erfindung und Weiterbildungen der Erfindung werden nun anhand von Ausführungsformen näher erläutert. In der Zeichnung zeigen:
Fig. 1 einen dreiphasigen Gleichstrommotor mit in Dreieckschaltung verbundenen Rotorwicklungen, wobei die Figurenteile A und B verschiedene Drehstellungen des Rotors gegenüber den Bürsten zeigen;
Fig. 2 Ersatzschaltbilder des in Fig. 1 gezeigten Motors in Drehstellung A bzw B;
Fig. 3 bei dem Motor nach Fig. 1 auftretende charakteristische Stromkennlinien, die aus der Rotorwicklungsumschaltung resultieren;
Fig. 4A eine Stromkennlinie des in Fig. 1 gezeigten Motors unter Berücksichtigung der Einflüsse der Motor-Gegen-EMK und des Lastmomentes;
Fig. 4B die differenzierte Form der in Fig. 4A dargestellten Stromkennlinie;
Fig. 5 den die Feinregelung in einer ersten Art betreffenden Schaltungsteil einer Ausführungsform des neuen Regelsystems;
Fig. 6 eine Ausführungsform des neuen Regelsystems mit Grob-Freinregelung; und
Fig. 7 den die Feinregelung in einer zweiten Art betreffenden Schaltungsteil einer Ausführungsform des neuen Regelsystems, bei dem eine PLL-Schaltung (PLL = Phase Locked Loop) eingesetzt ist.

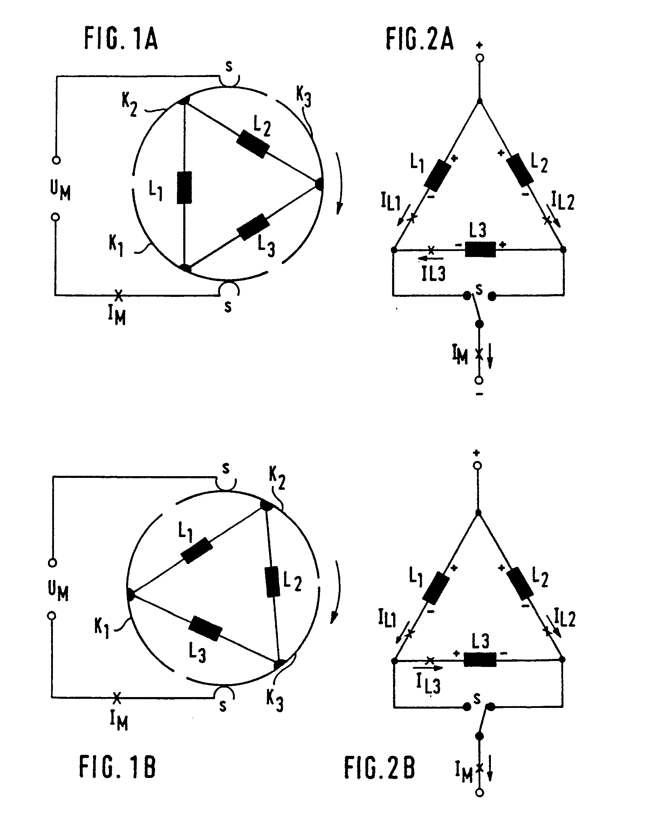

Fig. 1 zeigt das Konstruktionsprinzip eines dreipoligen bzw. dreiphasigen Gleichstrommotors mit in Dreieckschaltung verbundenen Rotorwicklungen L1, L2 und L3. An den Verbindungspunkten der Dreieckschaltung sind jeweils zwei der drei Rotorspulen mit einem Kommutatorsegment K1, K2 bzw. K3 verbunden. Über zwei Bürsten bzw. Schleifkontakte S sind jeweils zwei der drei Kommutatorsegmente mit der Motorspannung UM verbunden. Von der Gleichspannungsquelle M_{M} zum Motor fliesst dann ein Gesamtstrom I_{M}.

In der Rotorstellung A liegt die Rotorwicklung L1 an der Motorspannung UM, während die beiden anderen Rotorwicklungen L2 und L3 eine Serienschaltung bilden, die parallel zur Rotorwicklung L1 liegt. In der Rotorstellung B liegt nun die Rotorwicklung L2 an der Motorspannung UM, während die Rotorwicklungen L1 und L3 eine Serienschaltung bilden, die zu L2 parallel liegt.

In Fig. 2 sind die Ersatzschaltbilder für die Rotorstellungen A und B dargestellt. Dabei ist angenommen, dass durch die Rotorwicklungen L1 ein Teilstrom I_{L1} fliesst, während durch L2 eine Teilstrom I_{L2} und durch L3 ein Teilstrom 1_{L3} fliesst.

Wenn man von der üblichen Praxis ausgeht, dass die einzelnen Rotorwicklungen L1, L2 und L3 gleiche Impedanz aufweisen, ist der durch die jeweils in Reihe geschalteten Rotorwicklungen fliessende Teilstrom halb so gross wie der durch die jeweils dritte, an der Motorspannung liegende Rotorwicklung fliessende Teilstrom. In der Rotorstellung A fliesst daher durch die Rotorwicklung L1 ein Teilstrom I_{L1'} der doppelt so gross ist wie der durch die beiden Rotorwicklungen L2 und L3 fliessende Teilstrom. In der Rotorstellung B dagegen ist der durch L2 fliessende Teilstrom doppelt so gross wie der durch L1 und L3 fliessende Teilstrom. Betrachtet man beispielsweise die Rotorwicklung L1, ist der durch sie fliessende Teilstrom I_{L1} in der Rotorstellung A doppelt so gross wie in der Rotorstellung B.

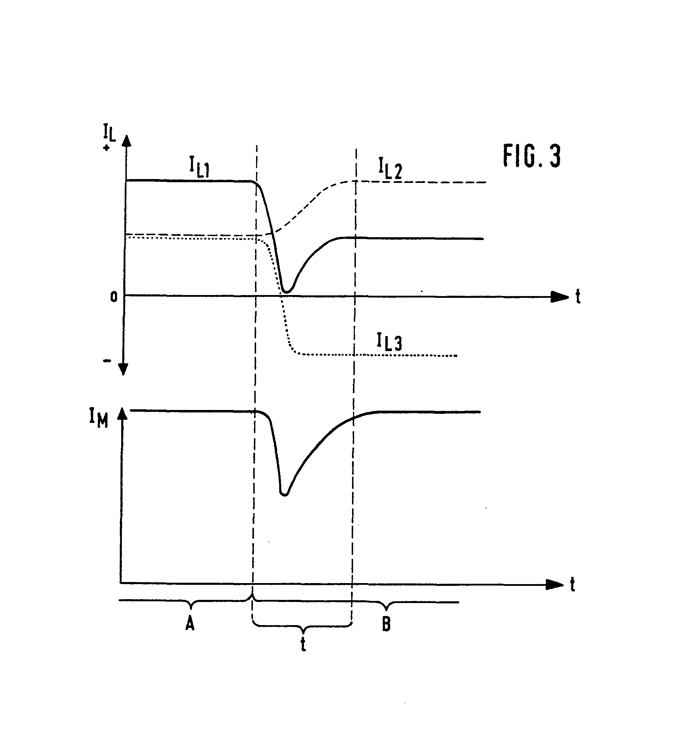

Der Verlauf der Teilströme I_{L1}, 1_{L2}, 1_{L3} und des Gesamtstroms IM in den Rotorstellungen A und B und in einer Umschaltphase t ist in Fig. 3 dargestellt. Während der Phase der Rotorstellung A fliesst durch L1 ein Strom der Grösse I und durch L2 und L3 ein gemeinsamer Strom der halben Grösse, also 1/2, dadurch bedingt, dass der Spulenwiderstand der beiden in Serie liegenden Rotorwicklungen doppelt so gross ist wie der Spulenwiderstand der dazu parallel liegenden Rotorwicklung L1. Beim Übergang auf die Ankerstellung B steigt der Strom in der nun direkt über UM liegenden Rotorwicklung L2 innerhalb der Zeit t von 1/2 auf I an. Der Strom in L3 kehrt sich durch die Umschaltung von der Rotorstellung A in die Rotorstellung B zwangsläufig von +1/2 auf -1/2 um, wobei er kurzzeitig zu Null wird. Weil in der Rotorstellung B L1 mit L3 in Serie geschaltet ist, muss der Strom durch L1 kurzzeitig ebenfalls zu Null werden, bevor er sich nach dem Absinken von I auf den Wert I/2 einstellt.

Für den Summenstrom IM ergibt sich somit während der Umschaltphase von Rotorstellung A nach Rotorstellung B ein kurzzeitiger Stromeinbruch von 1/2. Voraussetzung für das Entstehen eines solchen Stromeinbruchs ist eine ungeradzahlige Wicklungszahl, z.B. 5,7,9 usw. Dabei wird jedoch mit steigender Anzahl der Rotorwicklungen der Gesamtstromeinbruch proportional zum Summenstrom immer kleiner.

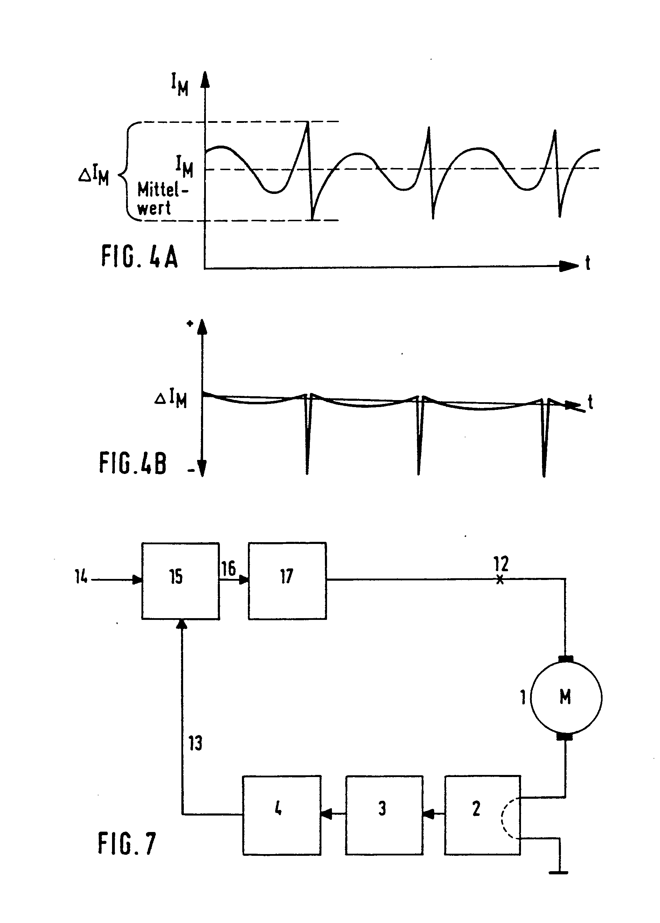

In der Praxis werden die Wicklungs- bzw. Teilströme 1_{L1}, I_{L2} und 1_{L3} jedoch nicht allein von der Motorspannung UM und dem Motorinnenwiderstand R_{M} bestimmt, sondern auch von der Motor-Gegen-EMK und dem Lastmoment. Daher ergibt sich eine Kurvenform, wie sie in Fig. 4A gezeigt ist. Aufgrund der überlagerten Welligkeit des Motorstroms scheidet eine Selektion der Umschaltphasen durch Amplitudenauswertung wegen zu geringer Signalunterschiede gegenüber den Welligkeitsanteilen aus.

Es werden daher die Anteile hoher Frequenz aus dem Spektrum des Gesamtstromverlaufs herausgegriffen, und zwar vorzugsweise durch Differenzieren des Motorgesamtstromes. Die Stromänderungen während der Umschaltphasen weisen nämlich einen höheren Betrag der Zeitableitung auf als die Welligkeitsanteile im Motorstrom. Durch das Differenzieren werden alle Störanteile durch die Welligkeit des Motorstroms herausgefiltert, da ihre Änderungsgeschwindigkeit pro Zeiteinheit erheblich geringer ist als die des Stromeinbruchs nach Fig. 3. Eine Darstellung der differenzierten Form der Stromkennlinie in Fig. 4A zeigt Fig. 4B.

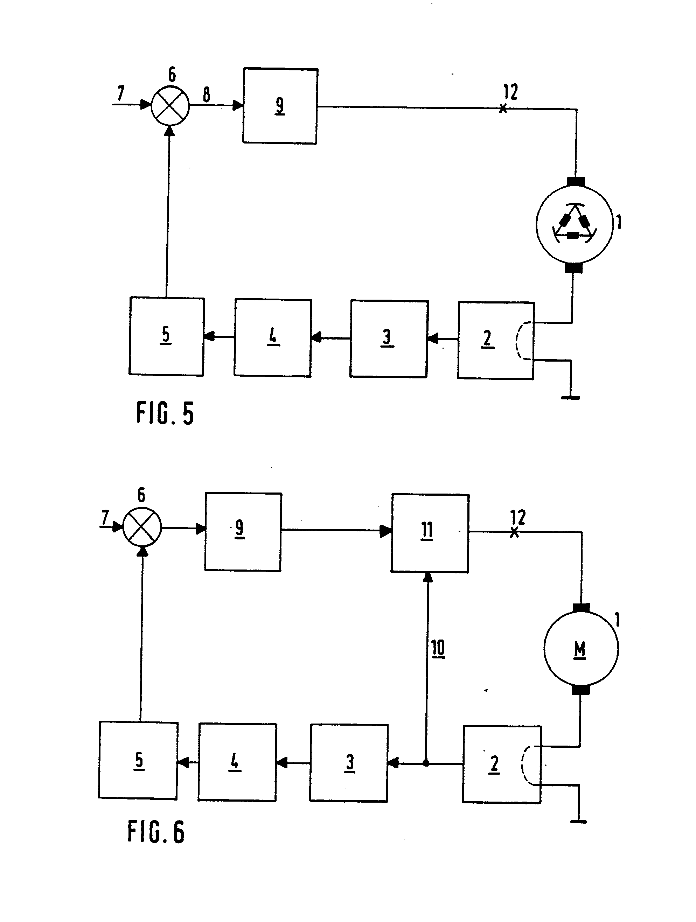

Fig. 5 zeigt eine erste Ausführungsform des Feinregelungsteils eines erfindungsgemäßen Regelsystems, bei dem die Drehzahlfeinregelung mittels der durch Differenzieren herausgegriffenen Umschalteinbrüche des Motorstroms vorgenommen wird. Bei der Darstellung dieser Ausführungsform wurde auf ein Blockschaltbild zurückgegriffen.

Der den dreiphasigen Motor 1 durchfliessende Motorgesamtstrom IM wird mit Hilfe eines Strom-Spannungs-Wandlers 2 in eine proportionale Spannung umgewandelt. Dem Strom-Spannungs-Wandler 2 ist eine Differenzierstufe 3 nachgeschaltet, die nur Signalanteile hoher Änderrungsgeschwindigkeit passieren lässt. Diese werden mittels eines auf die Differenzierstufe 3 folgenden Komparators 4 in Signale definierter Amplitude und Flankensteilheit umgewandelt. Dem Komparator 4 folgt ein Frequenz-Spannungs-Wandler 5, dessen Ausgangssignal eine frequenzproportionale Gleichspannung abgibt, die als Drehzahl-Istwert in einem Vergleicher 6 mit einem Drehzahl-Sollwert 7 verglichen wird. Der am Ausgang des Vergleichers 6 auftretende Differenzanteil 8 steuert einen Regelfehlerverstärker 9, der den Motorstrom 12 liefert.

Ein dreiphasiger Motor liefert pro Umdrehung am Ausgang der Differenzierstufe 3 sechs Impulse. Dies bedeutet bei einer Motordrehzahl von beispielsweise 2000 U/min eine Impulsfrequenz von 200 Hz. Wird als Frequenz-Spannungs-Wandler in der bevorzugten einfachsten Form eine monostabile Kippschaltung mit nachgeschaltetem Integrator verwendet, kann das Verhalten der Regelung bei schnellen Lastmomentsänderungen unbefriedigend sein, da bei niedrigen Tachofrequenzen die Integrationszeitkonstante zwangsläufig lang ist, wodurch sich eine merkbare Regelverzögerung ergibt.

Abhilfe erreicht man mit der in Fig. 6 gezeigten Ausführungsform, bei der die zuvor beschriebene Regelmethode nur zur Feinregelung benutzt wird, die mit einer andersartigen Grobregelung kombiniert ist.

Die Schaltung nach Fig. 6 unterscheidet sich von der nach Fig. 5 durch einen zwischen den Regelfehlerverstärker 9 und den Motor 1 geschalteten Addierer 11 und eine Verbindungsleitung 10 zwischen dem Ausgang des Strom-Spannungs-Wandlers 2 und einem Eingang des Addierers 11. Die restlichen Elemente des Blockschaltbildes entsprechen denen der Schaltung nach Fig. 5, so dass deren Verschaltung und Funktionsweise hier nicht noch einmal beschrieben zu werden braucht.

Bei der Ausführungsform nach Fig. 6 wird die dem Strom-Spannungs-Wandler 2 entnommene stromproportionale Gleichspannung 10 im Addierer 11 zu dem Ausgangssignal des Regelfehlerverstärkers 9 addiert. Hierdurch erhöht sich die Motorspannung 12 motorstromabhängig. Dadurch wird eine indirekte, mit dem Gleichspannungsanteil 10 steuerbare Grobregelung bzw. Vorregelung vorgenommen. Die Vorregelung wird vorzugsweise so dimensioniert, dass die am Ausgang des Addierers 11 entstehende negative Ausgangsimpedanz etwa 90% des Motorinnenwiderstandes kompensiert.

Mit der Feinregelung in der Regelschleife 2, 3, 4, 5, 6 und 9 brauchen dann nur noch 10% geregelt zu werden, was in einer kurzen Regelzeit bewältigt werden kann. Man kommt somit zu einer nahezu trägheitslosen Regelung. Mit anderen Worten, mit der Ausführungsform nach Fig. 6 kann man den Nachteil der Regelverzögerung bei niedrigen Tachofrequenzen, wie er bei der Schaltung nach Fig. 5 auftreten kann, vermeiden.

Fig. 7 zeigt eine Ausführungsform des Feinregelungsteils, bei der das die Istwertfrequenz tragende Ausgangssignal 13 des Komparators 4 mit einer Sollwertfrequenz 14 mittels einer PLL-Schaltung 15 hinsichtlich Frequenz- und Phasenabweichung verglichen wird. Das der Regelabweichung proportionale Fehlersignal 16 wird in Form einer Gleichspannung 16 auf eine Verstärkerstufe 17 gegeben, die den Motor 1 steuert. Hinsichtlich der Komponenten 1 bis 4 und deren Verschaltung besteht Übereinstimmung mit der Ausführungsform nach Fig. 5.

Hinsichtlich Einzelheiten der Verschaltungen der in den Fig. 5 bis 7 gezeigten Ausführungsformen wird ausdrücklich auf die Zeichnungen verwiesen.

## Patentansprüche

1. Verfahren zur Gewinnung einer drehzahlproportionalen Größe für die Drehzahlregelung eines Gleichstromkommutatormotors, der eine ungerade Anzahl Kommutatorsegmente aufweist, die relativ zu den Bürsten so angeordnet sind, daß nicht mehrere Kommutatorsegmentumschaltungen gleichzeitig erfolgen, wobei dem Frequenzspektrum eines dem Motorstrom proportionalen Signals die durch die Kommutatorsegmentumschaltungen entstehenden Anteile hoher Frequenz in Form von Nadelimpulsen entnommen und als Istwertgröße für die Drehzahlregelung aufbereitet werden, dadurch gekennzeichnet, daß zu einer Drehzahlgrobregelung eine negative Impedanz mit einem dem Motorstrom proportionalen Signal beeinflußt wird, daß der Widerstandswert der negativen Impedanz kleiner ist als der Innenwiderstand des Gleichstrommotors und daß zu einer Drehzahlfeinregelung die aus den Nadelimpulsen aufbereitete Istwertgröße verwendet wird.

2. Verfahren nach Anspruch 1, dadurch gekennzeichnet, dass ein Gleichstromkommutatormotor mit drei Kommutatorsegmenten verwendet wird.

3. Verfahren nach Anspruch 1, dadurch gekennzeichnet, dass zur Erzeugung des dem Motorstrom proportionalen Signals das Motorstromsignal in ein proportionales Spannungssignal umgewandelt wird.

4. Verfahren nach einem oder mehreren der Ansprüche 1 bis 3, dadurch gekennzeichnet, dass die Nadelimpulse durch Differenzieren des dem Motorstrom proportionalen Signals erzeugt werden.

5. Verfahren nach einem oder mehreren der Ansprüche 1 bis 4, dadurch gekennzeichnet, dass die Nadelimpulse mit einem Schwellenwert verglichen werden.

6. Verfahren nach einem oder mehreren der Ansprüche 1 bis 5, dadurch gekennzeichnet, dass die Nadelimpulse in Istwertimpulse definierter Flankensteilheit und definierter Impulslänge umgewandelt werden.

7. Verfahren nach einem oder mehreren der Ansprüche 1 bis 6, dadurch gekennzeichnet, dass die Nadelimpulse bzw. Istwertimpulse in ein frequenzproportionales Gleichspannungssignal umgewandelt werden und dieses als Istwertsignal verwendet wird.

8. Einrichtung zur Durchführung des Verfahrens nach Anspruch 1, mit einem mehrere Kommutatorwicklungen (L1L3) und Bürsten (5) aufweisenden Gleichstromkommutatormotor (1) und mit einer Drehzahlregeischaltung (2-9), wobei der Gleichstromkommutatormotor (1) eine ungerade Anzahl Kommutatorsegmente (K1-K3) aufweist, die relativ zu den Bürsten (5) derart angeordnet sind, dass eine gleichzeitige Umschaltung mehrerer Kommutatorsegmente (K1-K3) nicht auftritt, und wobei in Reihe zum Gleichstromkommutatormotor (1) ein Strom-Spannungs-Wandler (2) geschaltet ist, dadurch gekennzeichnet, dass dem Strom-Spannungs-Wandler (2) eine Differenzierstufe (3) nachgeschaltet ist, dass das Ausgangssignal der Differenzierstufe (3) auf den Istwerteingang eines Sollwert-Istwert-Vergleichers (6) der Drehzahlregelschaltung (2-9) geführt ist, und dass eine Addierstufe (11) vorgesehen ist, die mit einem Eingang mit dem Ausgang des Istwert-Sollwert-Vergleichers (6), mit einem anderen Eingang mit dem Ausgang des Strom-Spannungs-Wandlers (2) und mit ihrem Ausgang mit dem Gleichstromkommutatormotor (1) verbunden ist.

9. Einrichtung nach Anspruch 8, dadurch gekennzeichnet, dass der Gleichstromkommutatormotor (1) drei Kommutatorsegmente (K1, K2, K3) aufweist.

10. Einrichtung nach Anspruch 8 oder 9, dadurch gekennzeichnet, dass zwischen die Differenzierstufe (3) und den Sollwert-Istwert-Vergleicher (6) eine Komparatorstufe (4) geschaltet ist.

11. Einrichtung nach einem oder mehreren der Ansprüche 8 bis 10, dadurch gekennzeichnet, dass dem Sollwert-Istwert-Vergleicher (6) eine Frequenz-Spannungs-Wandlerstufe (5) vorgeschaltet ist.

12. Einrichtung nach Anspruch 11, dadurch gekennzeichnet, dass die Frequenz-Spannungs-Wandlerstufe (5) eine monostabile Kippstufe und eine dieser nachgeschaltete Integrierstufe aufweist.

13. Einrichtung nach einem oder mehreren der Ansprüche 8 bis 10, dadurch gekennzeichnet, dass als Sollwert-Istwert-Vergleicher eine PLL-Schaltung (15) vorgesehen ist, der als Istwertsignal das Ausgangssignal der Differenzierstufe (3) bzw. der Komparatorstufe (4) und als Sollwertsignal eine Sollwertfrequenz zugeführt ist und deren Ausgangssignal ein Regelabweichungssignal für die Drehzahlregelung des Motors (1) bildet.

## Revendications

1. Procédé d'obtention d'une grandeur proportionnelle à la vitesse de rotation pour la régulation de la vitesse de rotation d'un moteur à courant continu avec un collecteur à nombre impair de lames, qui sont disposées par rapport aux balais de façon que plusieurs commutations de lames du collecteur ne puissent s'effectuer simultanément, procédé selon lequel on prélève du spectre fré- quentiel d'un signal proportionnel au courant moteur les composantes haute fréquence, produites les commutations de lames du collecteur, sous forme d'impulsions aciculaires, et on les prépare comme grandeur de valeur instantanée pour la régulation de la vitesse de rotation, caractérisé en ce que, pour une régulation grossière de la vitesse de rotation, on influence une impédance négative par un signal proportionnel au courant moteur, que la résistance de l'impédance négative est inférieure à la résistance interne du moteur à courant continu et que, pour une régulation fine de la vitesse de rotation, on utilise la grandeur de valeur instantanée préparée à partir des impulsions aciculaires.

2. Procédé selon la revendication 1, caractérisé par l'emploi d'un moteur à courant continu avec un collecteur à trois lames.

3. Procédé selon la revendication 1, caractérisé en ce que le signal de courant moteur est converti en un signal en tension proportionnel pour la production du signal proportionnel au courant moteur.

4. Procédé selon une ou plusieurs des revendications 1 à 3, caractérisé en ce que les impulsions aciculaires sont produites par différentiation du signal proportionnel au courant moteur.

5. Procédé selon une ou plusieurs des revendications 1 à 4, caractérisé en ce que les impulsions aciculaires sont comparées à un seuil.

6. Procédé selon une ou plusieurs des revendications 1 à 5, caractérisé en ce que les impulsions aciculaires sont converties en impulsions de valeur instantanée à pente définine des fronts et durée définine.

7. Procédé selon une ou plusieurs des revendications 1 à 6, caractérisé en ce que les impulsions aciculaires ou de valeur instantanée sont converties en un signal en tension continue proportionnel à la fréquence, qui est utilisé comme signal de valeur instantanée.

8. Dispositif pour la mise en oeuvre du procédé selon la revendication 1, avec un moteur à courant continu (1) comportant plusieurs enroulements reliés au collecteur (L1L3) et balais (S) et d'une boucle de régulation de la vitesse de rotation (2-9), le collecteur dudit moteur (1) comprenant un nombre impair de lames (K1-K3) disposées par rapport aux balais (S) de façon à interdire une commutation simultanée de plusieurs lames (K1-K3), et un convertisseur courant/tension (2) étant en série avec le moteur à courant continu (1), caractérisé en ce qu'un étage différentiateur (3) est monté en aval du convertisseur courant/ tension (2), que le signal de sortie de l'étage différentiateur (3) est appliqué à l'entrée de valeur instantanée d'un comparateur consigne/valeur instantanée (6) de la boucle de régulation de vitesse de rotation (2-9) et qu'un étage additionneur (11), prévu en plus, est relié par une entrée à la sortie du comparateur consigne-valeur instantanée (6) par une autre entrée à la sortie du convertisseur courant/tension (2) et par sa sortie au moteur à courant continu (1).

9. Dispositif selon la revendication 8, caractérisé en ce que le moteur à courant continu (1) comprend un collecteur à trois lames (K1, K2, K3).

10. Dispositif selon la revendication 8 ou 9, caractérisé par un étage comparateur (4) inséré entre l'étage différentiateur (3) et le comparateur consigne-valeur instantanée (6).

11. Dispositif selon une ou plusieurs des revendications 8 à 10, caractérisé par un étage convertisseur fréquence/tension (5) inséré en amont du comparateur consigne-valeur instantanée (6).

12. Dispositif selon la revendication 11, caractérisé en ce que l'étage convertisseur fréquence/ tension (5) comprend une bascule monostable et un étage intégrateur en aval de cette dernière.

13. Dispositif selon une ou plusieurs des revendications 8 à 10, caractérisé en ce que le comparateur consigne-valeur instantanée est un montage PLL (15), qui reçoit comme signal de valeur instantanée le signal de sortie de l'étage différentiateur (3) ou de l'étage comparateur (4) et comme signal de consigne une fréquence de consigne, et dont le signal de sortie constitue un signal d'écart de régulation pour la régulation de vitesse de rotation du moteur (1).

## Claims

1. Method of obtaining a rotary speed-proportional value for regulating the rotary speed of a direct current commutator motor comprising an uneven number of commutator segments which are so disposed in relation to the brushes that a plurality of commutator segment switching operations do not take place simultaneously, in which from the frequency spectrum of a signal proportional to the motor current are derived in the form of needle pulses those high frequency portions which result from the commutator segment switching operations and are then prepared as an actual value magnitude for rotary speed adjustment,- characterized in that, for a rough rotary speed regulating process, a negative impedance is influenced with a signal proportional to the motor current, that the resistance value of the negative impedance is smaller than the internal resistance of the direct current motor, and that for a fine rotary speed regulating process the actual value magnitude prepared from the needle pulses is used.

2. Method according to Claim 1, characterized in that a direct current commutator motor having three commutator segments is used.

3. Method according to Claim 1, characterized in that to generate the signal proportional to the motor current, the motor current signal is converted into a proportional voltage signal.

4. Method according to one or more of Claims 1 to 3, characterized in that the needle pulses are generated by differentiation of the signal proportional to the motor current.

5. Method according to one or more of Claims 1 to 4, characterized in that the needle pulses are compared with a threshold value.

6. Method according to one or more of Claims 1 to 5, characterized in that the needle pulses are converted into actual pulses of definite flank steepness and definite pulse length.

7. Method according to one or more of Claims 1 to 6, characterized in that the needle pulses or actual value pulses are converted into a frequency proportional direct current voltage signal which is used as an actual value signal.

8. Means of carrying out the method according to Claim 1, with a direct current commutator motor (1) comprising a plurality of commutator windings (L1L3) and brushes (s) and with a rotary speed regulating circuit (2-9), the direct current commutator motor (1) comprising an uneven number of commutator segments (K1K3) which are so disposed in relation to the brushes (s) that a simultaneous switchover of a plurality of commutator segments (K1-K3) does not occur, a current-voltage converter (2) being connected in series with the direct current commutator motor (1), characterized in that on the downstream side of the current voltage converter (2) there is a differentiating stage (3), that the output signal from the differentiating stage (3) is conveyed to the actual value input of a desired value-actual value commparator (6) in the rotary speed regulating circuit (2-9), and in that an adding stage (11) is provided which has one input connected to the output of the actual-value desired value comparator (6), another input connected to the output of the current-voltage converter (2) and its output connected to the direct current commutator motor (1).

9. Means according to Claim 8, characterized in that the direct current commutator motor (1) comprises three commutator segments (K1, K2, K3).

10. Means according to Claims 8 or 9, characterized in that a comparator stage (4) is connected between the differentiating stage (3) and the desired value-actual value comparator (6).

11. Means according to one or more of Claims 8 to 10, characterized in that upstream of the desired value-actual value comparator (6) there is a frequency-voltage converter stage (5).

12. Means according to Claim 11, characterized in that the frequency-voltage converter stage (5) is a monostable flip-flop stage comprising an integrating stage on the down-stream side.

13. Means according to one or more of Claims 8 to 10, characterized in that provided as the desired value-actual value comparator is a PLL (phase locked loop) circuit (15) which receives as the actual value signal the output signal from the differentiating stage (3) or the comparator stage (4) and as a desired value signal a desired value frequency, its output signal constituting deviation signal for regulating the rotary speed of the motor (1
